# EUROPEAN PATENT SPECIFICATION

(11) **EP 2 688 775 B1**
(45) Date of publication and mention of the grant of the patent: **27.02.2019**
(21) Application number: 12713917.8
(22) Date of filing: 21.03.2012
(51) Int. Cl.: B60R 25/00, G08B 25/00

(54) **VEHICLE LOCATION & RECOVERY**
FAHRZEUGSTANDORTERMITTLUNG UND WIEDERBESCHAFFUNG
REPÉRAGE ET RÉCUPÉRATION DE VÉHICULE

(30) Priority: 23.03.2011 GB 201104894
(43) Date of publication of application: 29.01.2014
(73) Proprietor: Tracker Network (UK) Limited, Uxbridge, Middlesex UB8 2AD (GB)
(72) Inventor: CRINSON, Peter, Bicester, Oxfordshire OX26 3WD (GB)
(74) Representative: EIP
(86) International application number: PCT/EP2012/055035
(87) International publication number: WO 2012/126962

(56) References cited:
- EP-A2- 2 003 028
- EP-B1- 1 509 429
- FR-A1- 2 926 690
- US-A1- 2005 064 895
- US-A1- 2008 012 693
- US-A1- 2009 207 050
- US-A1- 2011 013 510

## Description

### Field

The present invention relates to vehicle location determination and particularly, but not exclusively, to establishment of stolen vehicle location to facilitate stolen vehicle recovery.

### Background

As used herein, a "vehicle" can be any kind of motor vehicle, such as a car, lorry, motor cycle, train, coach or ship. In addition, a vehicle can be any kind of container, which may be carried, for example, by any kind of motor vehicle.

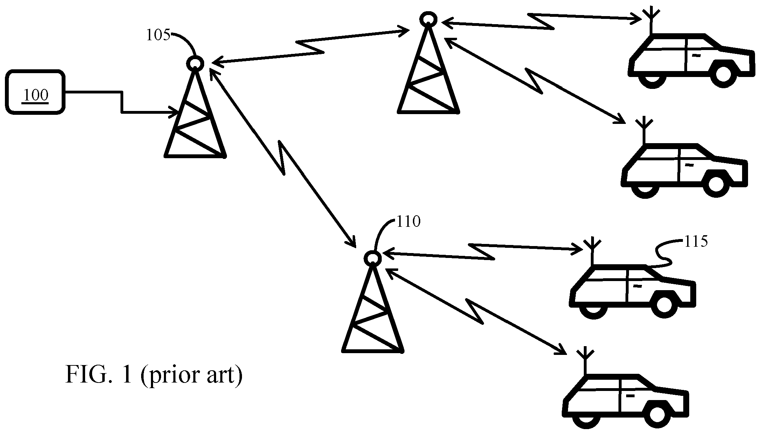

A known stolen vehicle recovery (SVR) system is illustrated in FIG. 1. When informed of a vehicle theft, a central SVR control system 100 can activate an apparatus, which will be referred to herein as a vehicle-mounted unit (VMU) (not shown), of a stolen vehicle 115, by broadcasting via a network of VHF wireless transceiver stations (WTS) 105, 110 a VHF downlink activation signal, which identifies the respective VMU. Once activated, the VMU emits a localised VHF periodic uplink alert signal, comprising an identity (ID). The ID typically uniquely identifies the VMU, the vehicle 115, or both. The VHF uplink alert signals can be detected by a nearby VHF detectors, such as a nearby WTS 110, and can be tracked by a police-vehicle-mounted detection unit (not shown). Alert signals tend to be localised, or have a relatively short range, because a VMU is typically concealed within a vehicle (thereby suppressing wireless signals) and, quite often, has no external aerial. In addition, alert signal power tends to be kept relatively low, in order to reduce the likelihood of detection by a thief, who would then be motivated to find and disarm the VMU completely. In the present context, 'nearby' is of course a relative term and depends on the power of the alert signal and the nature of the surroundings (for example, city or countryside surroundings) and may typically be between 50 and 300 metres. In contrast, an activation signal that is broadcast by a WTS 110 has a relatively high power and would typically be detectable by a VMU up to several kilometres or more away from the transmitter.

The term 'transceiver' is used broadly herein, in respect of VMU and/or WTS apparatus, to encompass any arrangement that has both transmitter and receiver capabilities, irrespective of whether or not the capabilities are provided by common components or circuitry. For example, as used herein, equipment having co-located but independently operating transmitter and receiver units is said to have a transceiver capability.

The SVR system illustrated in FIG. 1 exemplifies a first class or kind of SVR system, which depends on VHF downlink activation signals and VHF uplink alert signals. Such systems will be referred to herein as VHF-only SVR systems.

The present applicant operates a VHF-only SVR system under the name TRACKER Retrieve™.

Another exemplary known class or kind of SVR system offers GSM and GPS capability, in addition to VHF activation and alert capability (of the kind which has just been described in relation to VHF-only SVR). This kind of system will be referred to herein as a VHF/GSM SVR system. The employment of GSM means that a VHF/GSM VMU can be activated using standard GSM signalling and protocols, taking advantage of the relatively pervasive GSM cellular radio network. The addition of a GPS device means that a VHF/GSM VMU can determine its own location (as long as it can detect GPS satellite signals) and report the location back to the control centre via the GSM network. The control centre can then report extremely accurate location information to the police, in order that a police vehicle equipped with an appropriate VMU can be dispatched to the vicinity of the stolen vehicle. The police vehicle can then detect the relatively short range VHF uplink alert signals, emitted by the activated VMU, in order to track and apprehend the respective stolen vehicle.

The present applicant operates a VHF/GSM SVR system under the name TRACKER Locate™.

It will be appreciated that an advantage of a VHF/GSM SVR system, over a VHF-only SVR system, is the capability to employ the pervasive GSM wireless radio network, which can result in quicker vehicle apprehension and recovery.

Both of the aforementioned classes of SVR system are also described in EP1509429.

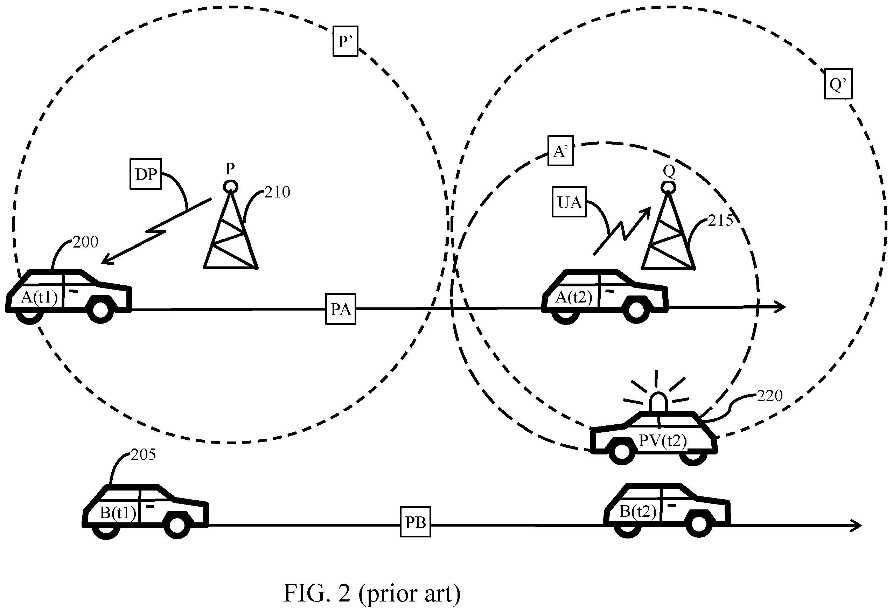

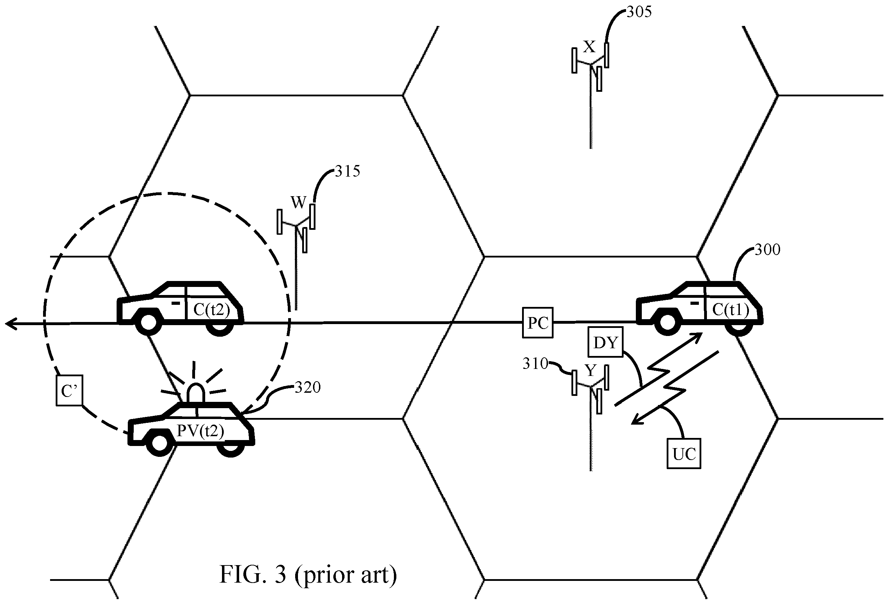

The reason that apprehension and recovery using a GSM/VHF VMU can be achieved more quickly can be appreciated by reference to the diagrams in FIG. 2 and FIG. 3 (neither of which are drawn to scale).

In FIG. 2 vehicles A 200 and B 205 are shown travelling from left to right and each vehicle has mounted in it a VHF-only VMU (not shown). Vehicles A and B are both shown at two points in time, t1 and t2 (t2 being later than t1), as depicted in the diagram, along respective paths, PA and PB. The path, PA, of vehicle A 200 is shown passing within range of WTS P 210 and WTS Q 215; where the approximate ranges of the transmitters are indicated by circles P' and Q' respectively. While only two WTS are shown, it will be appreciated that there would typically be relatively large number of WTS distributed around a geographic region. Such WTS networks are typically not as pervasive as the GSM network; that is, the geographic coverage of a WTS-based network of the kind described herein is typically not as comprehensive as coverage afforded by a cellular network. Nevertheless, in some cases, WTS networks may offer coverage in geographic locations where there is no GSM network coverage, or the GSM network coverage is poor.

If vehicle A 200 has been reported as stolen, the VHF-only VMU in vehicle A can be activated by a VHF downlink activation signal, DP, broadcast by WTS P 210 at time t1. At time t2, the VHF-only VMU in vehicle A emits a relatively localised VHF uplink alert signal, UA, the approximate range of which is indicated by the circle A'. The alert signal, UA, has a range that means it would be detectable by WTS Q 215 and/or by police vehicle PV 220 at or around time t2. In this way, when the alert signal, UA, is detected by WTS Q 215, and is communicated back to the control centre 100, the general location of stolen vehicle A 200 can be deduced by the control centre 100, as being within a few hundred meters of WTS Q 215. The police vehicle PV 220 is able to track and apprehend the stolen vehicle A by detecting the alert signal.

In contrast, due to the non-pervasive distribution of the WTS, the path PB means that vehicle B 205 does not pass within range of either WTS P 210 or WTS Q 215. Consequently, if vehicle B 205 has been stolen, the VHF-only VMU in vehicle B 205 cannot be activated by either WTS and there is no scope for police vehicle PV 220 to track and apprehend the stolen vehicle B 205, despite being in the vicinity thereof. In practice, statistically-speaking, vehicle B 205, in due course, will move within range of another WTS, and the respective VHF-only VMU will be activated by a received downlink activation signal. However, there may be a delay before this happens, and vehicle apprehension will consequently be delayed too.

In FIG. 3, vehicle C 300 is shown travelling on a path, PC, from right to left through GSM cells depicted by respective base transceiver stations (BTS) X 305, Y 310 and Z 315. Vehicle C 300 has mounted in it a VHF/GSM VMU (not shown), by which it is capable of performing both VHF and GSM communications. At time t1, the VHF/GSM VMU can immediately be activated by a GSM downlink activation signal, DY, via BTS Y 310. In response, the VMU communicates an uplink alert signal, UC, via BTS Y 310, reporting the GPS co-ordinates of the vehicle C 300, one or more times via BTS Y 310, and, subsequently, via BTS W 315. At time t2, vehicle C 300 is also shown emitting VHF uplink alert signals, having an approximate range C', which can be detected by nearby WTS and/or mobile detection units (for example, police vehicle PV 320). In this manner, a VHF/GSM VMU can be activated more quickly (insofar as the vehicle is in a GSM cell) and consequently a stolen vehicle, the VMU of which has been activated, may be apprehended more quickly too (see also US20090207050A).

### Summary

According to a first aspect, the present invention provides a system for facilitating stolen vehicle recovery, comprising:
- a host computer system (102) arranged to store a list of stolen vehicles and cause a VHF wireless communications network, comprising a network of geographically-spaced-apart VHF radio towers (400) having a first geographic coverage, to broadcast VHF activation signals associated with stolen vehicles;
- a first kind of vehicle mounted unit storing an identifier, and being arranged to detect activation signals broadcast by the VHF wireless communications network and to respond to the detection of an activation signal containing a matching identifier by emitting periodic alert signals including an identifier of the unit; and
- a second kind of vehicle mounted unit responsive to the detection of an alert signal from a unit of the first kind by communicating to the host, via a cellular wireless communications network having a second geographic coverage that is different from the first geographic coverage, a message including the respective identifier of the first kind of unit,
wherein, the operation of the second kind of unit augments the operation of the first kind of unit by extending to the first kind of unit the geographic coverage of the cellular wireless communications network.

According to a second aspect, the present invention provides method of performing stolen vehicle recovery in a system supporting two kinds of vehicle mounted units, each of which can receive wireless stolen vehicle recovery signals, the method comprising:
- a first kind of vehicle mounted unit storing an identifier, detecting an activation signal broadcast by a VHF wireless communications network having a first geographic coverage and comprising a network of geographically-spaced-apart VHF radio towers (400), and responding to the detection of an activation signal containing a matching identifier by emitting periodic alert signals including an identifier of the unit; and
- a second kind of vehicle mounted unit responding to the detection of an alert signal from a unit of the first kind by communicating to a host, via a cellular wireless communications network having a second geographic coverage that is different from the first geographic coverage, a message including the respective identifier of the first kind of unit.

### Brief Description of the Drawings

Various features and advantages of the invention will become apparent from the following description of embodiments of the invention, given by way of example only, which is made with reference to the accompanying drawings, of which:
FIG. 1 is a schematic depiction of a first kind of stolen vehicle recovery system as known in the prior art;
FIG. 2 is a schematic depiction of a stolen vehicle recovery scenario involving a first kind of known stolen vehicle recovery system;
FIG. 3 is a schematic depiction of a stolen vehicle recovery scenario involving a second kind of known stolen vehicle recovery system;
FIG. 4 is a schematic depiction of a stolen vehicle recovery scenario involving a stolen vehicle recovery system according to an embodiment of the present invention;
FIG. 5 is a functional block diagram depicting the interactions between a control centre and a first kind of stolen vehicle recovery unit;
FIG. 6 is a functional block diagram depicting the interactions between a first kind of stolen vehicle recovery unit and a second kind of stolen vehicle recovery unit, and between a second kind of stolen vehicle recovery unit and the control centre; and
FIG. 7 is a flow diagram describing operations performed by a second kind of stolen vehicle recovery unit.

### Detailed Description

Various embodiments of the present invention will now be described in more detail with reference to the accompanying drawings. It will be appreciated that the invention is not limited in its application to the details of method(s) and the arrangement of components as set forth in the following description or illustrated in the drawings. It will be apparent to a person skilled in the art that additional embodiments of the present invention not detailed in the description are possible and will fall within the scope of the present claims. Accordingly, the following description should not be interpreted as limiting in any way, and the scope of protection is defined solely by the claims appended hereto.

While the prior art has been described in terms of one class of SVR system that uses VHF-only and another class of SVR system that employs GSM and VHF, in general terms, embodiments of the present invention described herein find application in any scenario in which the recoverability of a vehicle using a first class of SVR system, which employs a first wireless infrastructure, is augmented by a second class of SVR system, which employs at least a second wireless infrastructure. In such a scenario, the first wireless infrastructure may be less pervasive than the second wireless infrastructure at least in certain geographic regions. More generally, the pervasiveness or geographic coverage of the first wireless system is different to the geographic coverage of the second wireless system. In this way, the speed of detecting and recovering vehicles using the first class of SVR system can be increased. A benefit of embodiments of the invention is that the recoverability of a vehicle using the first class of SVR system can be augmented without modifying any element (for example, wireless infrastructure or VMU) of the first SVR system. This is particularly advantageous for any pre-existing and future installed base of the first class of SVR system.

Although the following embodiment is described in terms of VHF-only and GSM wireless infrastructures, it is emphasised that embodiments of the invention may employ any other appropriate kind of wireless communications infrastructure, protocols and messaging techniques; for example any one of more of the wireless radio 0G to 4G standards and beyond, Bluetooth, WiFi, WiMAX, and/or any other kind of proprietary communications and signalling technologies. In some embodiments, for example, line-of-sight optical signalling may be employed in addition to, VHF radio uplink and downlink signalling. Indeed, in some embodiments, downlink activation and/or uplink alert signals (whether radio or optical) may be generated and/or detected by mobile communications means (for example vehicles carrying appropriate communications equipment) in addition to fixed towers and the like. Accordingly, in the present context, a wireless communications network may generally include fixed and/or mobile transceivers and/or network access points.

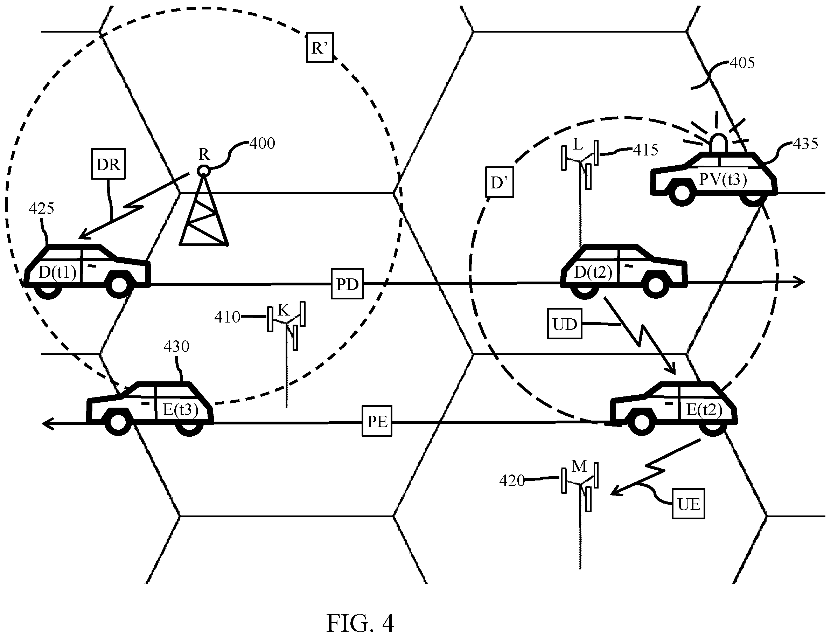

An embodiment of the present invention will now be described with reference to the scenario presented in FIG. 4. In FIG. 4, a VHF-only SVR communications network is represented by a single WTS R 400 having a range R'. The VHF network is shown overlaid by (or geographically co-located with) a GSM network 405, comprising BTS cells K 410, L 415 and M 420. In addition, two vehicles are shown as D 425 and E 430, each having a respective path, PD and PE. Vehicle D 425 has mounted on it a VHF-only VMU (not shown) whereas vehicle E 430 has mounted on it a GSM/VHF VMU (not shown). Each vehicle is illustrated at two points in time: vehicle D 425 at t1 and t2, and vehicle E 430 at t2 and t3. As shown, path PD means that vehicle D 425 moves within range R' of WTS R 400 at time t1, but is out of range R' of WTS R 400 by time t2. Path PE means that vehicle E 430 is in cell M 420 at time t2 and is in cell K 410 at time t3. In addition, at time t2, vehicle E 430 is within range D' of vehicle D's VMU. Police vehicle PV 435 may come within range D' of vehicle D's VMU at time t3, which is some time after t2. At time t3, police vehicle PV 435 and vehicle E 430 need not be within range of WTS R 400 or any of the BTSs of the GSM network.

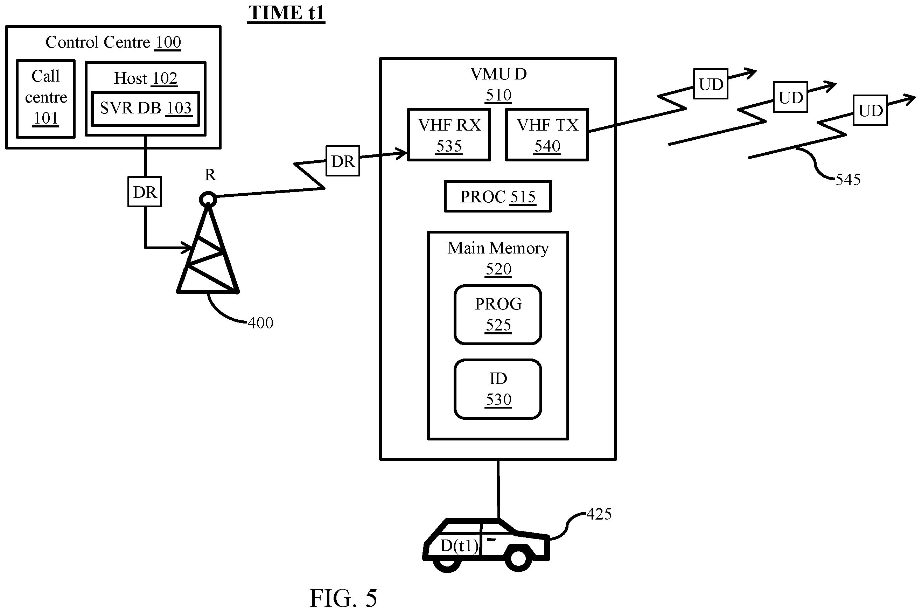

FIG. 5 illustrates in a simplified manner the communications that occur at time t1, in the scenario that is depicted in FIG. 4, between vehicle D 425 and the WTS R 400. FIG. 5 in addition illustrates the main functional components of a known VMU D 510, which is mounted on vehicle D 425. VMU D 510 comprises a processor 515, main memory 520, storing a program 525 for controlling the VMU D 510 and an ID 530, which uniquely identifies the VMU D 510 and/or the vehicle D 425. The ID 530 is usable by the control centre 100 to identify a VMU/vehicle, which enables the control centre 100 to issue a VHF downlink activation signal DR identifying the VMU D 510 and to identify a VHF uplink signal UD 545 received from the VMU D 510. The VMU D 510 in addition includes a VHF transceiver, comprising a VHF receiver 535 and a VHF transmitter 540.

The control centre 100 is illustrated in simplified form and typically includes a call centre 101, including human operators for receiving stolen vehicle notification telephone calls from vehicle owners, and a host computer system 102, operable to manage a stolen vehicle database 103 and, via which, communications to and from VMUs can be controlled. Of course, the functions of the host 102 may be realised in one computer system or across any appropriate arrangement of multiple co-located or geographically distributed computer systems.

As shown in FIG. 5, at time t1, having previously received a message that vehicle D 425 has been stolen, the control centre 100 issues a VHF downlink activation signal DR, including the ID of VMU D, which is broadcast by the WTS R 400 (and all other WTS in the network). In response to detection of the downlink activation signal, DR, by the VHF receiver 535, the processor 515, under the control of the program 525, compares the ID in the signal with the stored ID 530. If the IDs match, then the processor 515 controls the VHF transmitter 540 to begin emitting periodic VHF uplink alert signals UD 545.

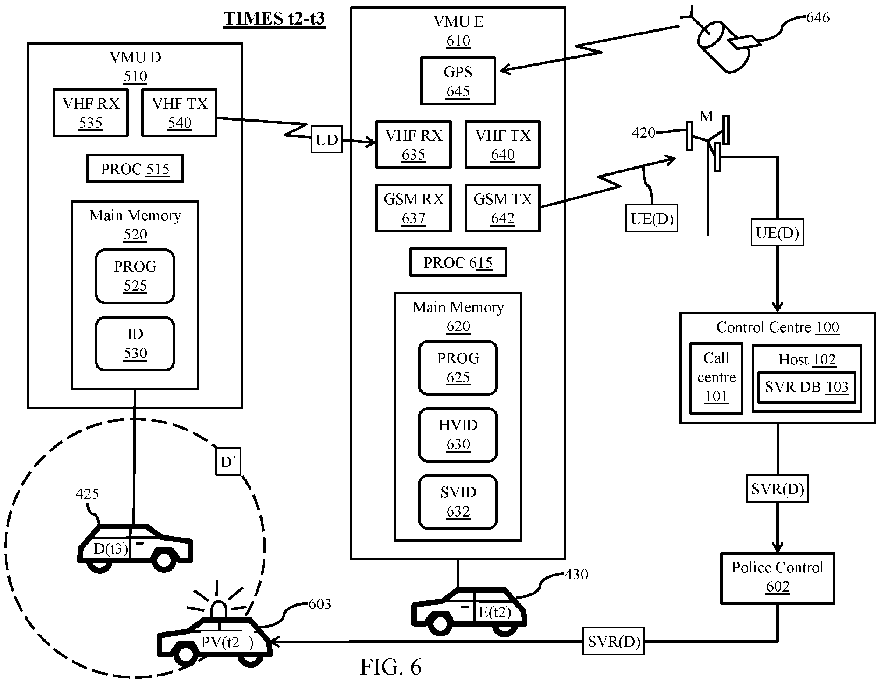

FIG. 6 illustrates in a simplified manner the communications that occur at times t2-t3, in the scenario that is depicted in FIG. 4, between vehicle D 425 and vehicle E 430, between vehicle E 430 and the control centre 100, between the control centre 100 and a police control centre 602, and between the police control centre 602 and a police vehicle PV 603 in which is mounted a VHF detector (not shown). FIG. 6 in addition illustrates the main functional components of VMU D 510, which is mounted on vehicle D 425, and the main functional components of VMU E 610, which is mounted on vehicle E 430. VMU D 510 of vehicle D 425 has already been described. VMU E 610 of vehicle E 430, according to the present embodiment, generally incorporates all the components of VMU D 500. VMU E 610 in addition includes a GSM transceiver comprising a GSM transmitter 642 and a GSM receiver 637, and a GPS device 645, for receiving signals from GPS satellites 646 and calculating the unit's location. Instead of a single ID store in main memory 620, VMU E 610 includes a home vehicle ID store (HVID) 630, which is equivalent to the ID 530 in VMU D 510, and a stolen vehicle ID (or IDs) store SVID 632, which at least temporarily stores the identity of a stolen vehicle obtained from detected VHF uplink alert signals. VMU E 610 also has an enhanced control program 625, including program logic for controlling the additional capabilities of the VMU E 610, by comparison to the capabilities of VMU D 510, as will be described.

As shown in FIG. 6, at time t2, the VHF receiver 635 of VMU E 610 receives a VHF uplink alert signal UD directly from VMU D 510. VMU E 610 determines (for example by inspecting a message header) that the signal is a VHF uplink alert signal identifying VMU D 510, and stores the associated ID as a SVID 632. Next, the VMU E 610 communicates a GSM uplink signal UE(D) to the control centre 100 via the BTS M 420. The uplink signal includes the GPS co-ordinates of the VMU E 610 and the identity, SVID 632, of the stolen vehicle D 425. Once communicated in the uplink signal, the SVID 632 may be discarded.

In effect, VMU E 610 behaves as a repeater, greatly extending the operational range of VMU D 510, by using an entirely different wireless network infrastructure that is not otherwise available for use by VMU D 510, to repeat, or communicate, an uplink alert signal to the control centre 100.

The control centre 100 receives and correlates the received stolen vehicle ID against its vehicle database 103.

The vehicle database 103 typically includes for each vehicle that is registered with a respective SVR service a record including, for example, owner name and owner contact details, and the make, model, colour and vehicle registration number, in addition to the ID of the VMU that is mounted in the vehicle, and a status flag to indicate whether or not the respective vehicle has been reported as stolen. The status is changed to 'stolen' when the vehicle is reported as having been stolen. The status is 'OK' if the vehicle has not been stolen or is changed to 'OK' once the vehicle has been recovered.

If the uplink signal UE(D) identifies a vehicle that has the 'stolen' status, the control centre 100 sends an SVR message, SVR(D), to the police control centre 602. The SVR message identifies the stolen vehicle, for example using make, model, colour and registration information, and includes the GPS co-ordinates of the vehicle E 430, which provides an approximation to the location of vehicle D 425. The SVR message may also include time information about when the vehicle D 425 was at that approximate location. The police control centre 602 issues a corresponding SVR message to any police vehicle(s) PV 603 in the general vicinity of the stolen vehicle, using standard police communications. A police-vehicle-mounted VHF detector (not shown) is then activated and thereby is able to track a stolen vehicle D 425, by detecting (when within range D') the respective periodic VHF uplink alert signals, UD, emitted by vehicle D.

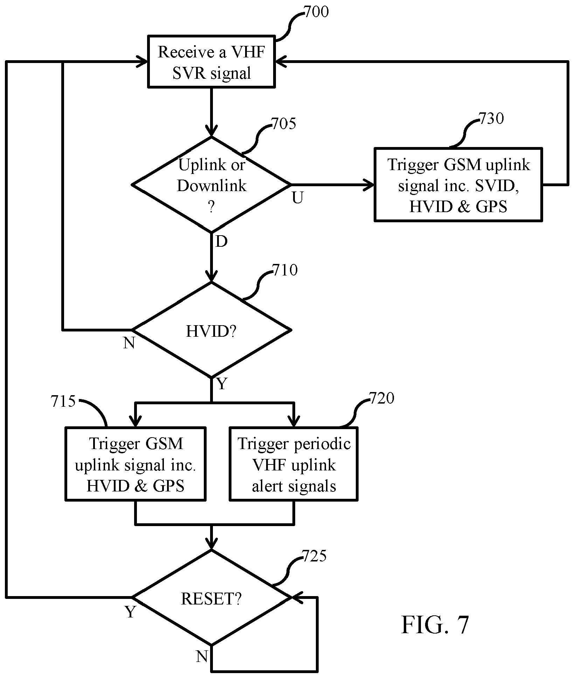

The flow diagram in FIG. 7 illustrates the exemplary operation of a GSM/VHF VMU E 610 according to an embodiment of the present invention, on receipt of a VHF SVR signal.

The VHF receiver 635 remains in a 'ready' state, awaiting receipt of a VHF SVR signal. In a first step [700], the VHF receiver 635 detects a VHF SVR signal. Next [705] the processor 615 determines, for example by inspecting message header data, whether the VHF signal is a downlink activation signal from the control centre 100 or an uplink alert signal from another vehicle's VHF-only VMU D. As already alluded to, any appropriate kind of message format, which may be an encoded or encrypted format, may be employed for uplink and downlink signalling and messaging.

If the received VHF signal is a downlink activation signal from the control centre 100, the processor 615 behaves in a generally known way by determining whether a vehicle ID in the signal matches the HVID 630 of the VMU E 610. If there is no match, the process iterates to step [700] so that the VMU E 610 returns to the ready-to-receive state. In some embodiments, the processor 615 may direct the VHF transmitter 640 of VMU E 630 to retransmit the downlink activation signal, to be received by other VMUs. If, however, the vehicle ID matches the HVID 630, indicating that the respective vehicle E 430 has itself been stolen, the processor 615 directs the GSM transmitter 642 to contact the control centre 100 [715], in order to pass the HVID 630 and GPS co-ordinates of the stolen vehicle E 430 to the control centre 100. In addition, the processor 615 directs [720] the VHF transmitter 640 to begin emitting periodic VHF uplink alert signals; for receipt by WTS receivers and/or police-vehicle-mounted detectors. The VMU E 610 remains in an alert state (in which it continues to emit VHF uplink alert signals) until the stolen vehicle 430 is apprehended and the respective VMU E 610 is reset [725], at which point the process iterates to step [700] so that the VMU E 610 returns to the ready-to-receive state. The VHF uplink alert signals may or may not continue to be emitted during an alert state while the vehicle engine is not running, depending on how the VMU is configured and powered.

According to the present embodiment, however, if the received signal is an uplink alert signal from another stolen vehicle's VHF-only VMU D 510, the processor 615 extracts the stolen vehicle's ID, at least temporarily stores it as SVID 632 and directs the GSM transmitter 642 to contact the control centre 100 [730], in order to communicate at least the received SVID 632 of the stolen vehicle D 425, the GPS co-ordinates of the vehicle E 430, which has not itself been stolen but in which the VMU E 610 is mounted and, optionally, the HVID 630 of the recipient VMU E 610. The VMU E 610 has no prior knowledge of the SVID and, conveniently, is not required to perform any operations to determine if the SVID relates to a stolen vehicle: the VMU E 610 simply generates the message and forwards it to the control centre 100, so that the control centre can determine whether the vehicle D 425 has been stolen and, if so, what action is required in order to recover the stolen vehicle. The process then iterates to step [700] so that the VMU returns to the ready-to-receive state.

In some embodiments, the VMU E 610 may communicate a message to the control centre each time it detects a VHF uplink alert signal, even if the alert signal emanates from the same VMU In this way, a degree of tracking is performed simply by receiving a plurality of signals, typically having the same VMU D ID and different GPS co-ordinates; assuming vehicle E is moving but irrespective of whether or not vehicle E is moving. In this way, the control centre 100 can plot the course of a stolen vehicle, which may enable law enforcement agencies to intercept the stolen vehicle further along its route, and may provide evidence that links the location of the stolen vehicle to the location of a suspected thief at a given time. Furthermore, if VMU E 610 were to receive VHF uplink alert signals from plural different VMUs at or around the same time, each respective ID, accompanied by the GPS co-ordinates of the VMU E 610, would be communicated to the control centre (using one or more messages) at least once.

Many alternatives to the embodiment described above will be immediately evident to the skilled artisan.

For example, in some embodiments, VMU E 430 may have the GSM transceiver capability and no VHF transmission capability, whereby recovery of vehicle E (if stolen) relies on sending GPS co-ordinates only to the control centre 100. Nevertheless, VMU E 430 maintains the ability to augment the recoverability of vehicle D 425, as VMU E 430 can detect VHF uplink alert signals from VMU D 425 and communicate associated SVID and home location information to the control centre 100 using GSM.

In addition, or alternatively, in some embodiments, a VMU of the second kind may not be able to rely on, or even have, a GPS device to determine its location. In this event, location information of a vehicle on which the VMU is mounted can still be ascertained, for example, by using GSM cell ID (or equivalent) which in effect identifies the cell via which the VMU is accessing the GSM network, to ascertain the location of the respective BTS. The GSM network operator may triangulate the location of the VMU based on signals received at multiple BTSs at different locations. Hence, the approximate location of a stolen vehicle D having a VMU of the first kind can still be determined and communicated to the police to facilitate apprehension and recovery.

It is expected that when sufficient numbers of the second kind of VMU (e.g. VMU E) are in operation, the recoverability of vehicles having a first kind of VMU (for example, VMU D) would increase significantly: the naturally distributed (and mobile) nature of the second kind of VMUs effectively forming a mesh network of additional uplink alert signal detectors. Considering it in another way, the mesh network would, in effect, create a social network, whereby the owners of the second kind of VMU would be perceived as being socially aware and contributing to a reduction in vehicle theft (or at least facilitating faster stolen vehicle recovery). Of course, in some embodiments, the second kind of VMU may be adapted to be configurable, such that the owner could decide whether or not to permit their own VMU to contribute to such a mesh network. For example, a simple switch may be provided in order to activate or deactivate the associated capability, or it may be a pre-determined installation option. In addition, or alternatively, a financial (or other kind of) inducement may be offered to encourage an owner of a second kind of VMU to permit it to participate in such a mesh network. For example, an inducement may take the form of a reduced cost of ownership (for example, reduced VMU cost or reduced running monthly costs), or it may involve a 'reward' in the event an owner's VMU were to contribute to the recovery of another vehicle. Many other forms of inducement would no doubt be apparent.

## Claims

1. A system for facilitating stolen vehicle recovery, comprising:
- a host computer system (102) arranged to store a list of stolen vehicles and cause a VHF wireless communications network, comprising a network of geographically-spaced-apart VHF radio towers (400) having a first geographic coverage, to broadcast VHF activation signals associated with stolen vehicles;
- a first kind of vehicle mounted unit (510) storing an identifier (530), and being arranged to detect activation signals broadcast by the VHF wireless communications network (400) and to respond to the detection of an activation signal containing a matching identifier by emitting periodic alert signals including an identifier of the unit (510); and
- a second kind of vehicle mounted unit (610) responsive to the detection of an alert signal from a unit (510) of the first kind by communicating to the host (102), via a cellular wireless communications network (405) having a second geographic coverage that is different from the first geographic coverage, a message including the respective identifier of the first kind of unit (510),
wherein, the operation of the second kind of unit (610) augments the operation of the first kind of unit (510) by extending to the first kind of unit (510) the geographic coverage of the cellular wireless communications network.

2. A system according to claim 1, comprising means to determine the geographic location of the second kind of unit (610).

3. A system according to claim 2, wherein the second kind of unit (610) comprises a positioning device (645), for determining the geographic location of the respective unit, and the second kind of unit is arranged to communicate a geographic location determined by the device in the message that is communicated to the host (102).

4. A system according to claim 2, wherein the means (645) to determine the geographic location of the second kind of unit (610) operates by identifying the geographic location of a point via which the second kind of unit accesses the second wireless communications network (405).

5. A system according to any one of the preceding claims, wherein the cellular wireless communications network has a more pervasive geographic coverage than the VHF wireless communications network.

6. A system according to any one of the preceding claims, wherein the second kind of vehicle mounted unit (610), in addition, is arranged to detect activation signals transmitted via the first wireless communications network (400) and to respond to the detection of an activation signal intended for the unit (610) by emitting periodic alert signals including an identifier of the unit.

7. A system according to claim 6, wherein the second kind of vehicle mounted unit (610) is arranged to receive signals and determine if a received signal is an activation signal or an alert signal.

8. A system according to claim 7, wherein, if a received signal is an activation signal the second kind of vehicle mounted unit (610) is arranged to determine if the signal is intended for the said unit and, if it is, the unit is arranged to contact a control centre via the cellular wireless communications network.

9. A system according to claim 8, wherein, if the signal is intended for the said unit (610), the unit is further arranged to trigger its own periodic alert signals including an identifier of the said unit.

10. A system according to any one of the preceding claims, wherein the host (102) is arranged to maintain a database (103) of vehicle information, including identifiers and information indicative of whether an identifier is associated with a stolen vehicle.

11. A system according to claim 10, wherein the host (102) is arranged to correlate the message received from the second kind of vehicle mounted unit (610) via the cellular wireless communications network, with data in the database (103) of vehicle information.

12. A method of performing stolen vehicle recovery in a system supporting two kinds of vehicle mounted units (510, 610), each of which can receive wireless stolen vehicle recovery signals, the method comprising:
using a first kind of vehicle mounted unit (510) storing an identifier (530), the steps of detecting an activation signal broadcast by a VHF wireless communications network, having a first geographic coverage and comprising a network of geographically-spaced-apart VHF radio towers (400), and responding to the detection of an activation signal containing a matching identifier by emitting periodic alert signals including an identifier of the unit (510); and
using a second kind of vehicle mounted unit (610), the step of responding to the detection of an alert signal from a unit of the first kind (510) by communicating to a host (102), via a cellular wireless communications network having a second geographic coverage that is different from the first geographic coverage, a message including the respective identifier of the first kind of unit (510).

## Patentansprüche

1. System zum Erleichtern der Rückgewinnung gestohlener Fahrzeuge, umfassend:
- ein Hostrechnersystem (102), das eingerichtet ist, um eine Liste gestohlener Fahrzeuge zu speichern und um ein VHF-Drahtloskommunikationsnetzwerk, das ein Netzwerk aus geographisch beabstandeten VHF-Funkmasten (400) umfasst, die eine erste geographische Abdeckung aufweisen, zu veranlassen, VHF-Aktivierungssignale, die mit den gestohlenen Fahrzeugen assoziiert ist, zu übertragen;
- eine erste Art einer fahrzeugmontierten Einheit (510), die einen Identifikator (530) speichert und eingerichtet ist, Aktivierungssignale, die durch das VHF-Drahtloskommunikationsnetzwerk (400) übertragen werden, zu empfangen und bei der Erfassung eines Aktivierungssignals, das einen übereinstimmenden Identifikator enthält, durch Abgeben periodischer Alarmsignale, die einen Identifikator der Einheit (510) umfassen, zu antworten; und
- eine zweite Art einer fahrzeugmontierten Einheit (610), die auf die Erfassung eines Alarmsignals von einer Einheit (510) der ersten Art durch Kommunikation einer Nachricht, umfassend den entsprechenden Identifikator der ersten Art einer Einheit (510), über ein zellulares Drahtloskommunikationsnetzwerk (405) das eine zweite geographische Abdeckung aufweist, die unterschiedlich von der ersten geographischen Abdeckung ist, an den Host (102) reagiert,
wobei der Betrieb der zweiten Art einer Einheit (610) den Betrieb der ersten Art einer Einheit (510) ergänzt durch Erweitern der geographischen Abdeckung des zellularen Drahtloskommunikationsnetzwerks für die erste Art einer Einheit (510).

2. System nach Anspruch 1, umfassend Mittel zum Erfassen der geographischen Position der zweiten Art einer Einheit (610).

3. System nach Anspruch 2, wobei die zweite Art einer Einheit (610) eine Positionierungsvorrichtung (645) zum Bestimmen der geographischen Lage der jeweiligen Einheit umfasst, und die zweite Art einer Einheit eingerichtet ist, um eine geographische Lage, die mit der Vorrichtung erfasst wurde, in der Nachricht, die an den Host (102) kommuniziert wird, zu kommunizieren.

4. System nach Anspruch 2, wobei die Mittel (645) zum Bestimmen der geographischen Lage der zweiten Art einer Einheit (610) durch Identifizieren der geographischen Lage eines Punktes, über den die zweite Art einer Einheit auf das zweite Drahtloskommunikationsnetzwerk (405) zugreift, betrieben wird.

5. System nach einem der vorhergehenden Ansprüche, wobei das zellulare Drahtloskommunikationsnetzwerk eine weiterreichende geographische Abdeckung als das VHF-Drahtloskommunikationsnetzwerk aufweist.

6. System nach einem der vorhergehenden Ansprüche, wobei die zweite Art einer fahrzeugmontierten Einheit (610) zusätzlich eingerichtet ist, Aktivierungssignale, die über das erste Drahtloskommunikationsnetzwerk (400) übertragen werden, zu erfassen und auf die Erfassung eines Aktivierungssignals, das für die Einheit (610) vorgesehen ist, durch Abgeben periodischer Alarmsignale, umfassend einen Identifikator der Einheit, zu antworten.

7. System nach Anspruch 6, wobei die zweite Art einer fahrzeugmontierten Einheit (610) eingerichtet ist, Signale zu empfangen und zu erfassen, ob ein empfangenes Signal ein Aktivierungssignal oder ein Alarmsignal ist.

8. System nach Anspruch 7, wobei, wenn ein empfangenes Signal ein Aktivierungssignal ist, die zweite Art einer fahrzeugmontierten Einheit (610) eingerichtet ist, zu bestimmen, ob das Signal für die Einheit vorgesehen ist, und, wenn es so ist, die Einheit eingerichtet ist, eine Steuerzentrale über das zellulare Drahtloskommunikationsnetzwerk zu kontaktieren.

9. System nach Anspruch 8, wobei, wenn das Signal für die Einheit (610) vorgesehen ist, die Einheit ferner eingerichtet ist, ihre eigenen periodischen Alarmsignale, umfassend einen Identifikator der Einheit, auszulösen.

10. System nach einem der vorhergehenden Ansprüche, wobei der Host (102) eingerichtet ist, eine Datenbasis (103) von Fahrzeuginformationen zu führen, die Identifikatoren und Informationen umfasst, die indikativ dafür sind, ob ein Identifikator mit einem gestohlenen Fahrzeug assoziiert ist.

11. System nach Anspruch 10, wobei der Host (102) eingerichtet ist, die Nachrichten, die von der zweiten Art einer fahrzeugmontierten Einheit (610) über das zellulare Drahtloskommunikationsnetzwerk empfangen wurden, mit den Daten in der Datenbasis (103) von Fahrzeuginformationen zu korrelieren.

12. Verfahren zum Ausführen der Rückgewinnung gestohlener Fahrzeuge mit einem System, das zwei Arten von fahrzeugmontierten Einheiten (510, 610) unterstützt, die jede drahtlose Gestohlenfahrzeugrückgewinnungssignale empfangen kann, wobei das Verfahren umfasst:
Verwenden einer ersten Art einer fahrzeugmontierten Einheit (510), die einen Identifikator (530) speichert, die Schritte des Erfassens eines Aktivierungssignals, das durch ein VHF-Drahtloskommunikationsnetzwerk (400) übertragen wird, das eine erste geographische Abdeckung aufweist und ein Netzwerk geographisch beabstandeter VHF-Funkmasten (400) umfasst, und des Antwortens auf die Erfassung eines Aktivierungssignals, das einen passenden Identifikator aufweist durch Abgeben periodischer Alarmsignale, umfassend einen Identifikator der Einheit (510); und
Verwenden einer zweiten Art einer fahrzeugmontierten Einheit (610), die Schritte des Antwortens auf die Erfassung eines Alarmsignals von einer Einheit der ersten Art (510) durch Kommunizieren einer Nachricht, umfassend den jeweiligen Identifikator der ersten Art einer Einheit (510), über ein zellulares Drahtloskommunikationsnetzwerk, das eine zweite geographische Abdeckung aufweist, die unterschiedlich zur ersten geographischen Abdeckung ist, an einen Host (102).

## Revendications

1. Système pour faciliter la récupération de véhicule volé, comprenant :
- un système d'ordinateur hôte (102) agencé pour stocker une liste de véhicules volés et amener un réseau de communications sans fil VHF, comprenant un réseau de tours radio VHF séparées géographiquement (400) ayant une première couverture géographique, à diffuser des signaux d'activation VHF associés à des véhicules volés ;
- un premier type d'unité montée sur véhicule (510) stockant un identifiant (530), et étant agencé pour détecter des signaux d'activation diffusés par le réseau de communications sans fil VHF (400) et pour répondre à la détection d'un signal d'activation contenant un identifiant concordant en émettant des signaux d'alerte périodiques incluant un identifiant de l'unité (510) ; et
- un second type d'unité montée sur véhicule (610) sensible à la détection d'un signal d'alerte en provenance d'une unité (510) du premier type en communiquant à l'hôte (102), via un réseau de communications sans fil cellulaire (405) ayant une seconde couverture géographique qui est différente de la première couverture géographique, un message incluant l'identifiant respectif du premier type d'unité (510),
dans lequel, le fonctionnement du second type d'unité (610) augmente le fonctionnement du premier type d'unité (510) en étendant au premier type d'unité (510) la couverture géographique du réseau de communications sans fil cellulaire.

2. Système selon la revendication 1, comprenant des moyens pour déterminer la localisation géographique du second type d'unité (610).

3. Système selon la revendication 2, dans lequel le second type d'unité (610) comprend un dispositif de positionnement (645), pour déterminer la localisation géographique de l'unité respective, et le second type d'unité est agencé pour communiquer une localisation géographique déterminée par le dispositif dans le message qui est communiqué à l'hôte (102).

4. Système selon la revendication 2, dans lequel les moyens (645) pour déterminer la localisation géographique du second type d'unité (610) fonctionnent en identifiant la localisation géographique d'un point via lequel le second type d'unité accède au second réseau de communications sans fil (405).

5. Système selon l'une quelconque des revendications précédentes, dans lequel le réseau de communications sans fil cellulaire a une couverture géographique plus pervasive que le réseau de communications sans fil VHF.

6. Système selon l'une quelconque des revendications précédentes, dans lequel le second type d'unité montée sur véhicule (610), de plus, est agencé pour détecter des signaux d'activation transmis via le premier réseau de communications sans fil (400) et pour répondre à la détection d'un signal d'activation destiné à l'unité (610) en émettant des signaux d'alerte périodiques incluant un identifiant de l'unité.

7. Système selon la revendication 6, dans lequel le second type d'unité montée sur véhicule (610) est agencé pour recevoir des signaux et déterminer si un signal reçu est un signal d'activation ou un signal d'alerte.

8. Système selon la revendication 7, dans lequel, si un signal reçu est un signal d'activation, le second type d'unité montée sur véhicule (610) est agencé pour déterminer si le signal est destiné à ladite unité et, si c'est le cas, l'unité est agencée pour contacter un centre de contrôle via le réseau de communications sans fil cellulaire.

9. Système selon la revendication 8, dans lequel, si le signal est destiné à ladite unité (610), l'unité est en outre agencée pour déclencher ses propres signaux d'alerte périodiques incluant un identifiant de ladite unité.

10. Système selon l'une quelconque des revendications précédentes, dans lequel l'hôte (102) est agencé pour maintenir une base de données (103) d'informations de véhicule, incluant des identifiants et des informations indiquant si un identifiant est associé à un véhicule volé.

11. Système selon la revendication 10, dans lequel l'hôte (102) est agencé pour mettre en corrélation le message reçu en provenance du second type d'unité montée sur véhicule (610) via le réseau de communications sans fil cellulaire, avec des données dans la base de données (103) d'informations de véhicule.

12. Procédé d'exécution de récupération de véhicule volé dans un système supportant deux types d'unités montées sur véhicule (510, 610), dont chacun peut recevoir des signaux de récupération de véhicule volé sans fil, le procédé comprenant :
en utilisant un premier type d'unité montée sur véhicule (510) stockant un identifiant (530), les étapes consistant à détecter un signal d'activation diffusé par un réseau de communications sans fil VHF, ayant une première couverture géographique et comprenant un réseau de tours radio VHF séparées géographiquement (400), et répondre à la détection d'un signal d'activation contenant un identifiant concordant en émettant des signaux d'alerte périodiques incluant un identifiant de l'unité (510) ; et
en utilisant un second type d'unité montée sur véhicule (610), l'étape consistant à répondre à la détection d'un signal d'alerte en provenance d'une unité du premier type (510) en communiquant à un hôte (102), via un réseau de communications sans fil cellulaire ayant une seconde couverture géographique qui est différente de la première couverture géographique, un message incluant l'identifiant respectif du premier type d'unité (510).
